# EUROPEAN PATENT SPECIFICATION

(11) **EP 3 340 171 B1**
(45) Date of publication and mention of the grant of the patent: **06.05.2020**
(21) Application number: 16831884.8
(22) Date of filing: 05.07.2016
(51) Int. Cl.: G06T 5/00, G06T 5/50

(54) **DEPTH IMAGE DENOISING METHOD AND DENOISING DEVICE**
TIEFENBILDENTRAUSCHUNGSVERFAHREN UND ENTRAUSCHUNGSVORRICHTUNG
PROCÉDÉ ET DISPOSITIF DE DÉBRUITAGE D'IMAGE DE PROFONDEUR

(30) Priority: 26.10.2015 CN 201510702229
(43) Date of publication of application: 27.06.2018
(73) Proprietor: BOE Technology Group Co., Ltd., Beijing 100015 (CN)
(72) Inventor: ZHAO, Jibo, Beijing 100176 (CN); ZHAO, Xingxing, Beijing 100176 (CN)
(74) Representative: AWA Sweden AB
(86) International application number: PCT/CN2016/088576
(87) International publication number: WO 2017/071293

(56) References cited:
- CN-A- 103 886 557
- CN-A- 104 021 553
- CN-A- 104 268 506
- CN-A- 105 354 805
- US-A1- 2015 022 518
- US-A1- 2015 043 808
- SHEN JU ET AL: "Layer Depth Denoising and Completion for Structured-Light RGB-D Cameras", IEEE COMPUTER SOCIETY CONFERENCE ON COMPUTER VISION AND PATTERN RECOGNITION. PROCEEDINGS, IEEE COMPUTER SOCIETY, US, 23 June 2013 (2013-06-23), pages 1187-1194, XP032493160, ISSN: 1063-6919, DOI: 10.1109/CVPR.2013.157 [retrieved on 2013-10-02]

## Description

### BACKGROUND

### 1. Technical Field

The present disclosure relates to image processing technology, and particularly to a depth image denoising method and denoising apparatus.

### 2. Description of the Related Art

In prior art, a depth image of a shot object is obtained usually by a visual imaging apparatus having a pair of cameras (for example, a binocular recognition system). However, in the process of computing depth information of a shot object, noise(s) is/are always an important factor that affects accuracy of the computation. Conventional denoising method usually searches ineffective connectivity region of smaller area, for example, connectivity region of an area less than five pixel points, within the depth image. These ineffective connectivity regions are regarded automatically as isolated noises (or are named as ineffective points), and then, these isolated noises are removed directly. Nevertheless, some noises are connected to effective connectivity region of greater area, and, by using the conventional denoising method, these noises that are connected to effective connectivity region of greater area will not be eliminated, which reduces the denoising effect.

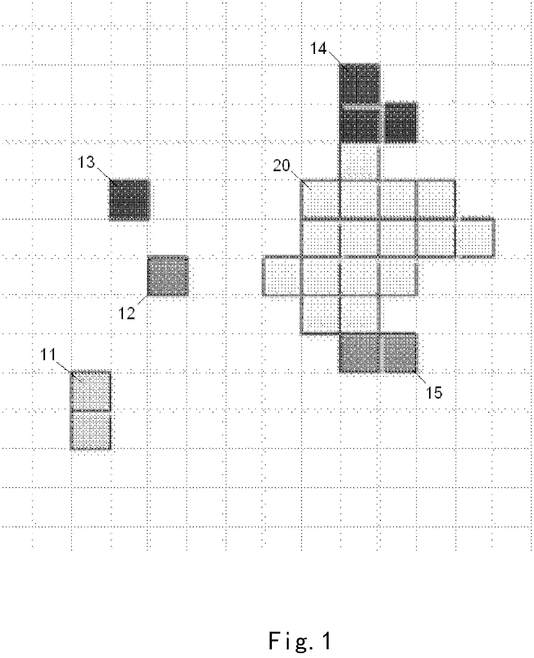

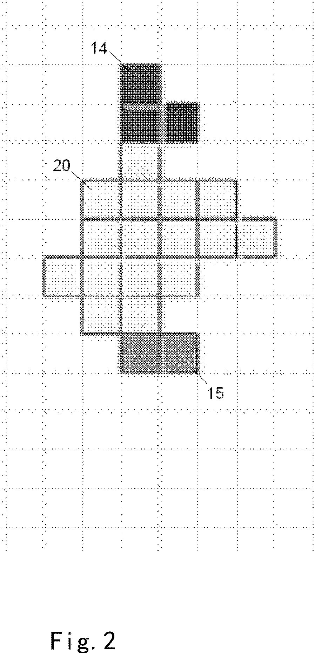

Fig. 1 shows an original depth image of a shot object. Fig. 2 shows a depth image obtained by denoising on the original depth image of Fig. 1, using a conventional denoising method.

Referring to Fig. 1, noises 11, 12, 13 have smaller areas (less than five pixel points), accordingly, in the conventional denoising method, the three noises 11, 12, 13 are regarded as isolated noises, and then are removed directly. However, the other two noises 14, 15 are connected to an effective connectivity region 20 of greater area, accordingly, in the conventional denoising method, the other two noises 14, 15 are not removed. As a result from this, the two noises 14, 15 are still remained in the denoised depth image, for example, as shown in Fig. 2.

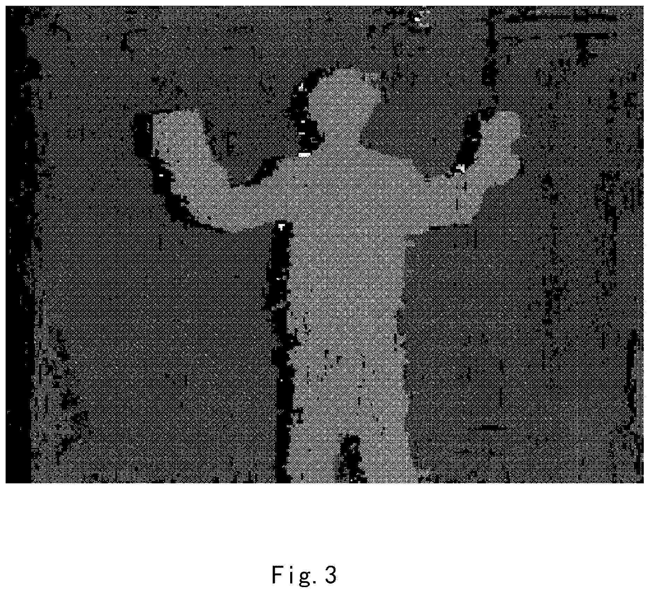

The conventional denoising method cannot remove the two noises 14, 15 which are connected to the effective connectivity region 20 of greater area, which reduces the denoising effect, thereby lowering quality of the depth image. For example, Fig. 3 shows an example of a human body depth image obtained by denoising on a human body depth image, by using a conventional denoising method. Referring to Fig. 3, in the denoised human body depth image, there are several white points (noises) which are connected to the human body. These white points are connected to the human body, accordingly, they cannot be removed in the conventional denoising method, which lowers quality of the human body depth image.

CN 104021553 A1 a sonar image object detection method based on pixel point layering. The method comprises: after sonar image threshold segmentation, forming regions with unequal area sizes, and marking eight connected domains; screening the marked regions; layering the screened images; finding the center point of each region; setting the length of an object external connection rectangle to be a, by taking the center points as centers, segmenting images each with a size of assa, and marking these images as z1, z2, z3,...zn; calculating possibility coefficients p, m and n, wherein the p is manually determined, m=the number of pixel points in each type in each layer, n=bright spot number/regional area, the bright spot number is the number of bright spots included in each type in each layer, and the regional area is the area of a minimum circumcircle of the type; calculating the morphological characteristics of a minimum external connection rectangle and a minimum external ellipse of each region, and screening each region; and detecting and segmenting object regions according to the possibility coefficients and the object morphological characteristics.

US 2015/0043808 A1 discloses an image processing apparatus comprising: an image acquisitionunit configured to acquire an image; a depth map acquisition unit configured to acquire a depth map corresponding to the image; a refinement unit configured to detect a saliency region from the image and to refine the depth map on the basis of the saliency region, the saliency region being a region on which a person tends to focus; and an image processing unit configured to apply image processing to the image using the depth map refined by the refinement unit.

XP 32493160A discloses layer depth denoising and completion for structured-light RGB-D cameras.

US 2015/0022518 A1 discloses an image process device, having a depth map generation unit generating a depth map of an input image on the basis of the input image and a depth model.

### SUMMARY

The present disclosure aims to solve at least one of the abovementioned problems and defects existing in the prior art.

An object of the present disclosure is to provide a depth image denoising method which is capable of effectively eliminating noise(s) which is/are connected to effective connectivity region of greater area, thereby improving the denoising effect.

Another object of the present disclosure is to provide a depth image denoising apparatus which is capable of effectively eliminating noise(s) which is/are connected to effective connectivity region of greater area, thereby improving the denoising effect.

According to an aspect of the present disclosure, there is provided a depth image denoising method, comprising the following steps:
a step S1 10 of, decomposing an original depth image of a shot object into n layers of depth image, where n is an integer that is greater than or equal to two;
a step S120 of, denoising on each of the n layers of depth image, to eliminate isolated noise(s) in each of the n layers of depth image; and
a step S130 of, merging the denoised n layers of depth image, to obtain a final denoised depth image.

According to another aspect of the present disclosure, there is provided a depth image denoising apparatus comprising: an image decomposing device configured for decomposing an original depth image into n layers of depth image (M1∼Mn), where n is an integer that is greater than or equal to two; an image denoising device configured for denoising on each of the n layers of depth image (M1∼Mn), to eliminate isolated noise(s) in each of the n layers of depth image (M1∼Mn); and an image merging device configured for merging the denoised n layers of depth image (M1∼Mn), to obtain a final denoised depth image.

In these embodiments of the present disclosure, firstly an original depth image is decomposed into a plurality of layers of depth image; then, isolated noise(s) in each of the layers of depth image is/are eliminated in sequence, and finally, the denoised layers of depth image are merged, to obtain a denoised depth image. With the denoising method according to the present disclosure, not only isolated noise(s) in the depth image can be eliminated, but also noise(s) which is/are connected to effective connectivity region of greater area can be eliminated effectively, thereby improving the denoising effect.

Other objects and advantages of the present disclosure will become apparent and more readily appreciated from the following description of the present disclosure, taken in conjunction with the accompanying drawings.

### BRIEF DESCRIPTION OF THE DRAWINGS

Fig. 1 shows an original depth image of a shot object;
Fig. 2 shows a depth image obtained by denoising on the original depth image of Fig. 1, using a conventional denoising method;
Fig. 3 shows an example of a human body depth image obtained by denoising on a human body depth image, by using a conventional denoising method;
Fig. 4 shows a corresponding relation between a depth of an original depth image outputted by a visual imaging apparatus and an actual distance of a shot object to the visual imaging apparatus;
Fig. 5 shows a principle diagram of decomposing an original depth image into four layers of depth image, by using a depth image denoising method according to an embodiment of the present disclosure;
Fig. 6 shows an original depth image of a shot object;
Figs. 7a-7d show four layers of depth image achieved after decomposing the original depth image of Fig. 6, by using a depth image denoising method according to an embodiment of the present disclosure;
Figs. 8a-8d show four layers of depth image achieved after denoising on the four layers of depth image of Figs. 7a-7d;
Fig. 9 shows a final depth image obtained after merging the denoised four layers of depth image of Figs. 8a-8d;
Fig. 10 shows a process of denoising on an original depth image, by using a depth image denoising method according to an embodiment of the present disclosure;
Fig. 11 shows an example of a human body depth image obtained by denoising on a human body depth image, by using a depth image denoising method according to an embodiment of the present disclosure; and
Fig. 12 shows a block diagram of a depth image denoising apparatus according to an embodiment of the present disclosure.

### DETAILED DESCRIPTION OF THE EMBODIMENTS

Technical solutions of the present disclosure will be further described hereinafter in detail in conjunction with these embodiments and with reference to the attached drawings, wherein the like reference numerals refer to the like elements. These embodiments of the present disclosure with reference to the attached drawings are provided so that generally concept of the present disclosure will be thorough and complete, and should not be construed as limiting the present disclosure.

In addition, in the following detailed description, a lot of specific details are expounded to provide a complete understanding on these embodiments of the present disclosure. However, obviously, one or more embodiment(s) can be implemented without involving these specific details. In other situations, well-known structures and devices are presented illustratively in order to simplify the drawings.

In accordance with a general technical concept, there is provided a depth image denoising method comprises the following steps: decomposing an original depth image of a shot object into n layers of depth image, where n is an integer that is greater than or equal to two; denoising on each of the n layers of depth image, to eliminate isolated noise(s) in each of the n layers of depth image; and, merging the denoised n layers of depth image, to obtain a final denoised depth image.

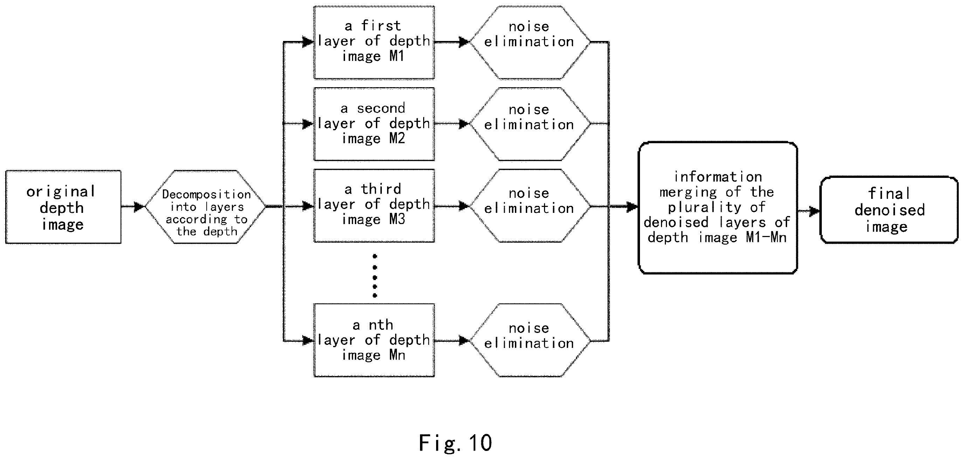

Fig. 10 shows a process of denoising on an original depth image, by using a depth image denoising method according to an embodiment of the present disclosure.

In the embodiment of Fig. 10, the process of denoising on an original depth image mainly comprises the followings steps:
a step S110 of, decomposing an original depth image of a shot object into n layers of depth image (M1∼Mn), where n is an integer that is greater than or equal to two;
a step S120 of, denoising on each of the n layers of depth image (M1∼Mn), to eliminate isolated noise(s) in each of the n layers of depth image (M1∼Mn); and
a step S130 of, merging the denoised n layers of depth image (M1∼Mn), to obtain a final denoised depth image.

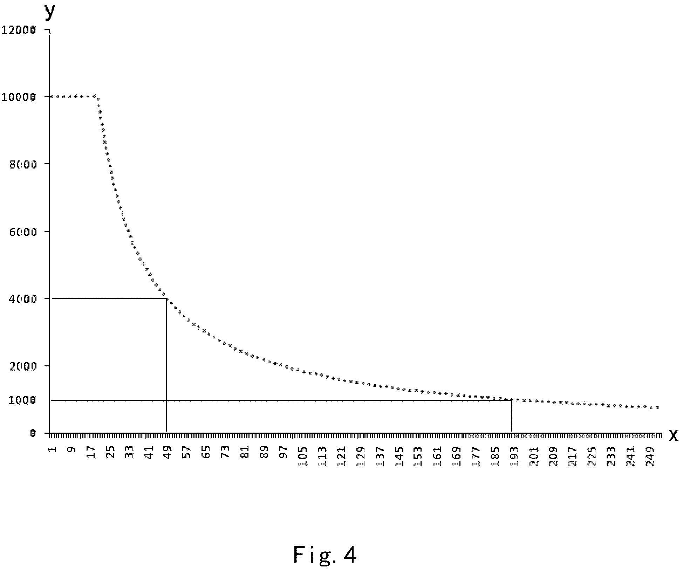

A specific example of denoising on an original depth image according to the present disclosure will be described in detail with reference to Fig. 4 to Fig. 9 hereafter.

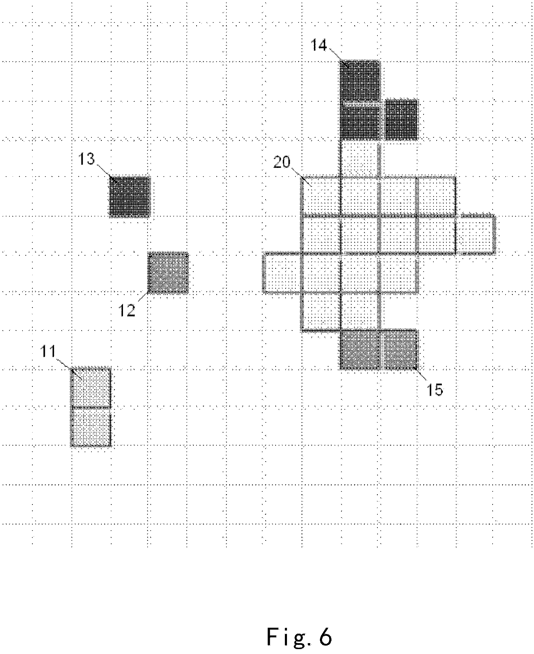

Fig. 6 shows an original depth image to be denoised. In order to facilitate to explain and illustrate differences between the denoising method according to the present disclosure and the conventional denoising method, the original depth image shown in Fig. 6 is completely the same as the original depth image shown in Fig. 1.

In an exemplary embodiment of the present disclosure, a visual imaging apparatus, for example, a binocular recognition system including a pair of cameras or a monocular recognition system having a single camera, can be used, to obtain an original depth image of a shot object.

In practical application, a binocular recognition system is generally used to obtain an original depth image of a shot object. The binocular recognition system obtains an original depth image of a shot object, by shooting the object simultaneously using double cameras, and calculating a three-dimensional coordinate of this object according to a positional relationship of the object on the images from left and right cameras and a spacing between the cameras. The original depth image comprises a plurality of pixels points arranged in array, for example, 1024^{∗}1024 pixels points, and a depth of each of the pixels points is indicated as grey level (which is divided into 0-256 levels, 0 denotes pure black and 256 denotes pure white.

The process of obtaining an original depth image of a shot object by using a binocular recognition system generally comprises the followings steps: arranging the pair of cameras at either side of the shot object symmetrically; shooting the shot object simultaneously by using the pair of cameras, to obtain two images of the shot object; and, obtaining the original depth image of the shot object in accordance with the two images shot simultaneously by using the pair of cameras.

In practical application, distances of these points of the shot object to the camera can be calculated according to depths of these pixel points in the original depth image of the shot object, since there is certain mapping relationship between the two. For example, Fig. 4 shows a corresponding relation between a depth of an original depth image outputted by a visual imaging apparatus and an actual distance of a shot object to the visual imaging apparatus (camera).

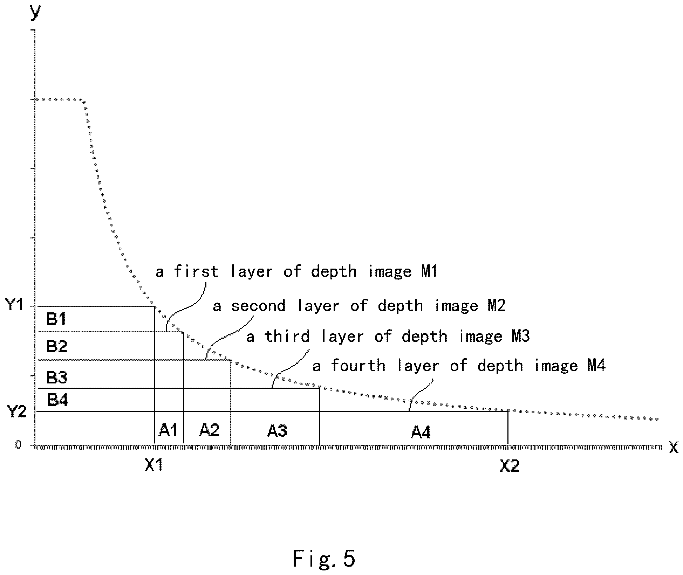

In Fig. 4, horizontal coordinate x represents a value (grey level) of the depth of an original depth image outputted, and, longitudinal coordinate y represents an actual distance (in millimeters) of a shot object to a visual imaging apparatus (camera). Fig. 5 shows a principle diagram of decomposing an original depth image into a plurality of layers of depth image.

As shown in Fig. 4, the value of the depth of the original depth image outputted gradually goes smaller as the actual distance of the shot object to the visual imaging apparatus (camera) gradually goes greater.

In practical application, the actual distance of the shot object to the visual imaging apparatus (camera) is required to be within a suitable range. For example, in the embodiment of Fig. 4, the actual distance of the shot object to the visual imaging apparatus (camera) is required to be within a range of 1m to 4m, since the depth range that corresponds to the distance range of 1m to 4m is the one within which depth information is much more concentrated. In the description hereafter, as shown in Fig. 5, the region within which depth information is much more concentrated is named as a preset depth region [X1, X2], while the one that corresponds to the preset depth region [X1, X2] is an actual distance region [Y2, Y1].

A process of denoising on an original depth image according to an exemplary embodiment of the present disclosure will be described in detail with reference to Fig. 5 to Fig. 9 hereafter.

First of all, an original depth image, for example, an original depth image shown in Fig. 6, of a shot object is obtained by using a visual imaging apparatus. In the original depth image, 11, 12, 13 represent three isolated noises separated from an effective connectivity region 20 of greater area, and, 14, 15 represent two noises connected to the effective connectivity region 20 of greater area.

Then, in accordance with the corresponding relation, as shown in Fig. 4, between a depth of an original depth image outputted by a visual imaging apparatus and an actual distance y of a shot object to the visual imaging apparatus, as shown in Fig. 5, an actual distance region [Y2, Y1] that corresponds to the preset depth region [X1, X2] of the original depth image is obtained.

After that, the actual distance region [Y2, Y1] that corresponds to the preset depth region [X1, X2] of the original depth image is divided equally into n distance intervals B1∼Bn, where n is an integer that is greater than or equal to two, as shown in Fig. 5. For clarity purpose, in the shown embodiment, for example, of Fig. 5, n is set to be equal to four. That is, the actual distance region [Y2, Y1] is divided equally into four distance intervals B1, B2, B3, B4. Please be noted that, interval lengths of the four distance intervals B1, B2, B3, B4 are equal to one another.

Then, the preset depth region [X1, X2] of the original depth image is divided into n depth intervals A1∼An which correspond respectively to the n distance intervals B1∼Bn, as shown in Fig. 5. Similarly, for clarity purpose, in the shown embodiment, the preset depth region [X1, X2] is divided into four depth intervals A1, A2, A3, A4. Please be noted that, interval lengths of the four depth intervals A1, A2, A3, A4 are not equal. Specifically, interval lengths of the four depth intervals A1, A2, A3, A4 are increased in turn. Namely, interval length of the depth interval A2 is greater than interval length of the depth interval A1, interval length of the depth interval A3 is greater than interval length of the depth interval A2, and, interval length of the depth interval A4 is greater than interval length of the depth interval A3.

After that, the original depth image is decomposed into n layers of depth image M1∼Mn which correspond respectively to the n depth intervals A1∼An. Similarly, for clarity purpose, in the shown embodiment, for example, of Fig. 5, the original depth image is decomposed into four layers of depth image M1, M2, M3, M4. That is, a first layer of depth image M1 corresponds to a first depth interval A1, a second layer of depth image M2 corresponds to a second depth interval A2, a third layer of depth image M3 corresponds to a third depth interval A3, and a fourth layer of depth image M4 corresponds to a fourth depth interval A4.

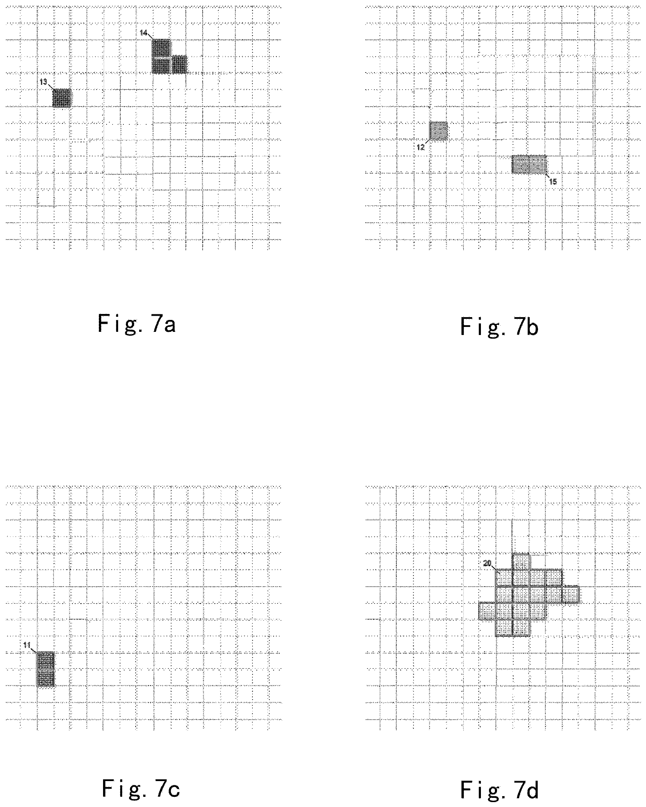

As a result, referring to Figs. 7a-7d, the original depth image of Fig. 6 is decomposed into four layers of depth image M1, M2, M3, M4, shown in Figs. 7a-7d.

In the shown embodiment, for example, of Fig. 6 and Fig. 7a, values of the depths of noises 13, 14 in the original depth image are within the first depth interval A1, accordingly, the noises 13, 14 are placed within corresponding pixel point positions of the first layer of depth image M1 as shown in Fig. 7a, while values of the depths of the rest pixel point positions of the first layer of depth image M1 are all set to zero.

Similarly, referring to Fig. 6 and Fig. 7b, values of the depths of noises 12, 15 in the original depth image are within the second depth interval A2, accordingly, the noises 12, 15 are placed within corresponding pixel point positions of the second layer of depth image M2 as shown in Fig. 7b, while values of the depths of the rest pixel point positions of the second layer of depth image M2 are all set to zero.

Similarly, referring to Fig. 6 and Fig. 7c, a value of the depth of noise 11 in the original depth image is within the third depth interval A3, accordingly, the noise 11 is placed within a corresponding pixel point position of the third layer of depth image M3 as shown in Fig. 7c, while values of the depths of the rest pixel point positions of the third layer of depth image M3 are all set to zero.

Similarly, referring to Fig. 6 and Fig. 7d, a value of the depth of an effective connectivity region 20 of greater area in the original depth image are within the fourth depth interval A4, accordingly, the effective connectivity region 20 is placed within corresponding pixel point positions of the fourth layer of depth image M4 as shown in Fig. 7d, while values of the depths of the rest pixel point positions of the fourth layer of depth image M4 are all set to zero.

As a result, the original depth image of Fig. 6 is decomposed into four layers of depth image M1, M2, M3, M4, shown in Figs. 7a-7d.

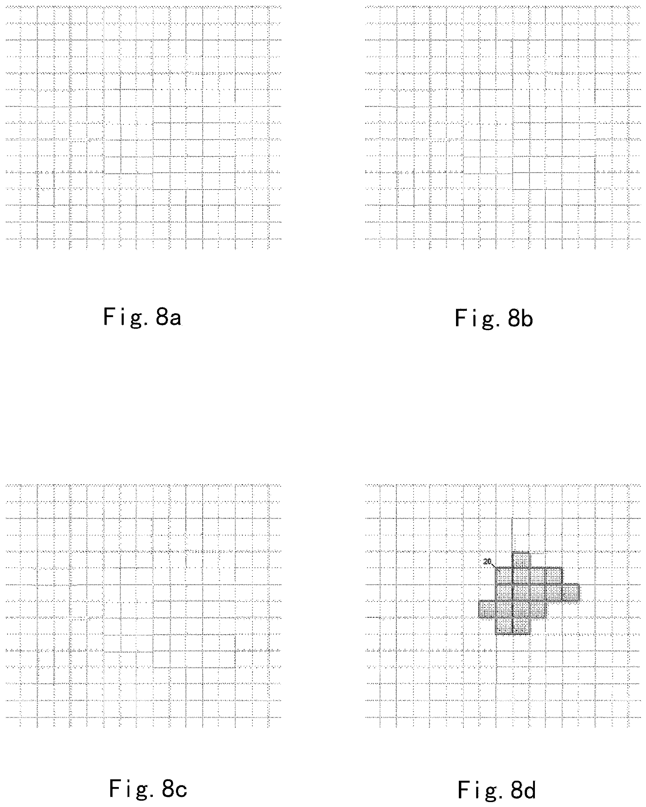

Then, denoising processings are performed on the four layers of depth image M1, M2, M3, M4, shown in Figs. 7a-7d, in sequence, to eliminate isolated noise(s) in each of the four layers of depth image M1, M2, M3, M4. As a result, all the noises 11, 12, 13, 14, 15 in Fig. 7a, Fig. 7b, Figs. 7c and 7d will be eliminated, to obtain denoised four layers of depth image M1, M2, M3, M4, as shown in Figs. 8a-8d. Referring to Figs. 8a-8d, after performing denoising processings on the four layers of depth image M1, M2, M3, M4, of Figs. 7a-7d, in sequence, all the noises 11, 12, 13, 14, 15 in Fig. 7a, Fig. 7b, Figs. 7c and 7d are eliminated, and only the effective connectivity region 20 is remained.

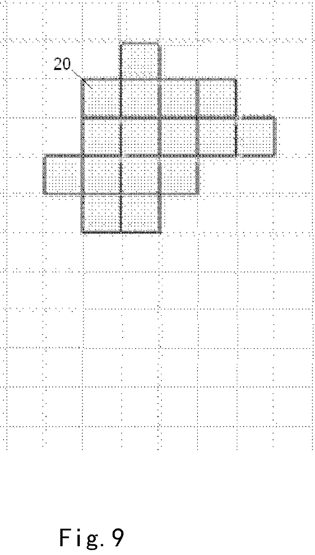

Finally, information of the denoised n layers of depth image M1∼Mn is merged, to obtain a final denoised depth image. In the shown embodiment, the denoised four layers of depth image M1, M2, M3, M4, shown in Figs. 8a-8d, are merged, to obtain a final denoised depth image, shown in Fig. 9.

Referring to Fig. 9, after performing the denoising processings, not only isolated noises 11, 12, 13 (see Fig. 6) which are separated from the effective connectivity region 20 of greater area are eliminated, but also noises 14, 15 (see Fig. 6) which are connected to the effective connectivity region 20 of greater area are eliminated, which increases the denoising effect, thereby improving quality of the denoised depth image.

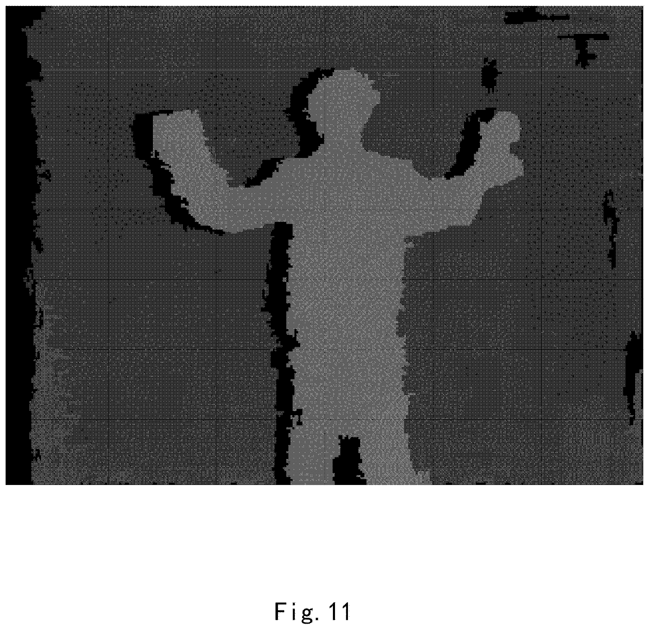

Fig. 11 shows an example of a human body depth image obtained by denoising on a human body depth image, by using a depth image denoising method according to an embodiment of the present disclosure. Referring to Fig. 11, the noise(s) which is/are connected to the human body is/are eliminated, thereby improving quality of the denoised depth image.

In the abovementioned embodiment, the original depth image of Fig. 6 is decomposed into four layers of depth image. However, the present disclosure is not limited to these embodiments shown, and, the original depth image can be decomposed into two layers, three layers, five layers or more layers. Generally, the more the number of the layers into which the original depth image is decomposed is, the higher the denoising accuracy is and the greater the amount of computation is, which will reduce the denoising efficiency. Accordingly, the optimal number of layers is determined in accordance with the denoising effect and the denoising speed. Generally, for an average host computer (a computer often used in daily life), in order to ensure the denoising effect and the denoising speed, the original depth image is usually decomposed into 12 layers or less than 12 layers. Please be noted that, an upper limit value of the number n is related to a processing speed of the host computer, accordingly, for a host computer with greater processing capacity, an upper limit value of the number n may be greater than 12.

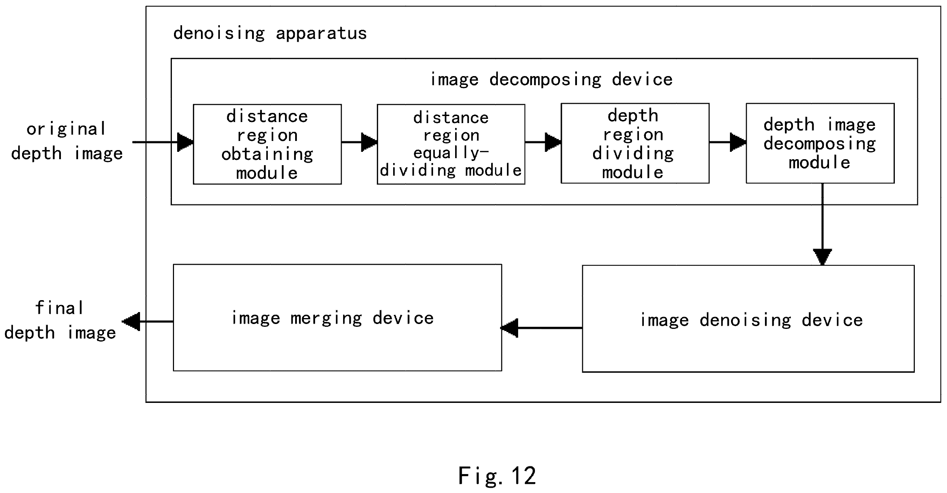

Fig. 12 shows a block diagram of a depth image denoising apparatus according to an embodiment of the present disclosure.

In another embodiment of the present disclosure, referring to Fig. 12, a depth image denoising apparatus, which corresponds to the abovementioned depth image denoising method, is also disclosed. The denoising apparatus mainly comprises: an image decomposing device configured for decomposing an original depth image into n layers of depth image M1∼Mn, where n is an integer that is greater than or equal to two; an image denoising device configured for denoising on each of the n layers of depth image M1∼Mn, to eliminate isolated noise(s) in each of the n layers of depth image M1∼Mn; and an image merging device configured for merging the denoised n layers of depth image M1∼Mn, to obtain a final denoised depth image.

Referring to Fig. 12, in the shown embodiment, corresponding to those in the abovementioned depth image denoising method, the image decomposing device may comprise: a distance region obtaining module, a distance region equally-dividing module, a depth region dividing module and a depth image decomposing module.

Referring to Fig.4 and Fig. 5, the abovementioned distance region obtaining module is for obtaining an actual distance region [Y2, Y1] that corresponds to a preset depth region [X1, X2] of the original depth image, in accordance with a corresponding relation between a depth x of the original depth image and an actual distance y of the shot object to a visual imaging apparatus.

Referring to Fig.4 and Fig. 5, the abovementioned distance region equally-dividing module is for dividing equally the actual distance region [Y2, Y1] that corresponds to the preset depth region [X1, X2] of the original depth image into n distance intervals B1∼Bn.

Referring to Fig.4 and Fig. 5, the abovementioned depth region dividing module is for dividing the preset depth region [X1, X2] of the original depth image into n depth intervals A1∼An which correspond respectively to the n distance intervals B1∼Bn.

Referring to Fig.4 and Fig. 5, the abovementioned depth image decomposing module is for decomposing the original depth image into the n layers of depth image M1∼Mn which correspond respectively to the n depth intervals A1∼An. Further, the abovementioned depth image decomposing module may be configured for: extracting a pixel point that corresponds to a depth interval Ai of an i^{th} layer of depth image Mi, from the original depth image, and, placing the extracted pixel point into a corresponding pixel point position in the i^{th} layer of depth image Mi, the rest pixel point positions in the i^{th} layer of depth image Mi being set to zero, where 1≤i≤n. Furthermore, a value of the number n is determined in accordance with a denoising effect and a denoising speed.

In a depth image denoising apparatus according to an exemplary embodiment of the present disclosure, the actual distance y of the shot object to the visual imaging apparatus is within a range of 0∼10m, a value of the depth of the original depth image is within a range of 0-256, and, the actual distance region [Y2, Y1] that corresponds to the preset depth region [X1, X2] of the original depth image is chosen to be [1m, 4m]. In addition, in a depth image denoising apparatus according to an exemplary embodiment of the present disclosure, the visual imaging apparatus by which the original depth image of the shot object is obtained may comprise a pair of cameras. Further, the pair of cameras are arranged at either side of the shot object symmetrically, the shot object is shot simultaneously by the pair of cameras, and, the original depth image of the shot object is obtained in accordance with two images shot simultaneously by the pair of cameras.

It should be understood by those skilled in the art that the abovementioned embodiments are exemplary, and those skilled in the art may make some modifications on these. Structures described in these embodiments can be combined in free, without involving conflictions in structure or in principle.

Although embodiments of the present disclosure have been shown and described with reference to the attached drawings, these embodiments illustrated in the attached drawings are used to illustrate preferable embodiments of the present disclosure, but not to limit the present invention which is defined by the appended claims.

## Claims

1. A depth image denoising method, wherein the method comprises the following steps:
a step S110 of, decomposing an original depth image of a shot object into n layers of depth image (M1∼Mn), where n is an integer that is greater than or equal to four, wherein each layer of depth image corresponds respectively to a different depth interval;
a step S120 of, denoising on each of the n layers of depth image (M1∼Mn), to eliminate at least one isolated noise region in each of the n layers of depth image (M1∼Mn); and
a step S130 of, merging the denoised n layers of depth image (M1∼Mn), to obtain a final denoised depth image,
wherein, the step S110 further comprises the following steps:
a step S111 of, obtaining an actual distance region [Y2, Y1] that corresponds to a preset depth region [X1, X2] of the original depth image, in accordance with a corresponding relation between a depth (x) of the original depth image and an actual distance (y) of the shot object to a visual imaging apparatus;
a step S1 12 of, dividing equally the actual distance region [Y2, Y1] that corresponds to the preset depth region [X1, X2] of the original depth image into n distance intervals (B1∼Bn);
a step S113 of, dividing the preset depth region [X1, X2] of the original depth image into n depth intervals (A1∼An) which correspond respectively to the n distance intervals (B1∼Bn); and
a step S114 of, decomposing the original depth image into the n layers of depth image (M1∼Mn) which correspond respectively to the n depth intervals (A1∼An);
wherein interval lengths of the four distance intervals (B1∼Bn) are equal to one another, interval lengths of the n depth intervals (A1∼An) are not equal, and interval lengths of the n depth intervals (A1∼An) are increased in turn.

2. The depth image denoising method of claim 1, wherein, the step S114 comprises:
extracting a pixel point that corresponds to a depth interval (Ai) of the i^{th} layer of depth image (Mi), from the original depth image, placing the extracted pixel point into a corresponding pixel point position in the i^{th} layer of depth image (Mi), and setting all the rest pixel point positions in the i^{th} layer of depth image (Mi) to zero, where 1≤i≤n.

3. The depth image denoising method of claim 2, wherein,
the actual distance (y) of the shot object to the visual imaging apparatus is within a range of 0∼10m;
a value of the depth of the original depth image is within a range of 0-256; and
the actual distance region [Y2, Y1] that corresponds to the preset depth region [X1, X2] of the original depth image is chosen to be [1m, 4m].

4. The depth image denoising method of claim 1, wherein,
the visual imaging apparatus by which the original depth image of the shot object is obtained comprises a pair of cameras.

5. The depth image denoising method of claim 4, wherein, obtaining the original depth image of the shot object comprises the following steps:
arranging the pair of cameras at either side of the shot object symmetrically;
shooting the shot object simultaneously by using the pair of cameras, to obtain two images of the shot object; and
obtaining the original depth image of the shot object in accordance with the two images shot simultaneously by using the pair of cameras.

6. A depth image denoising apparatus, wherein, the depth image denoising apparatus comprises:
an image decomposing device configured for decomposing an original depth image into n layers of depth image (M1∼Mn), where n is an integer that is greater than or equal to four, wherein each layer of depth image corresponds respectively to a different depth interval;
an image denoising device configured for denoising on each of the n layers of depth image (M1∼Mn), to eliminate at least one isolated noise region in each of the n layers of depth image (M1∼Mn); and
an image merging device configured for merging the denoised n layers of depth image (M1∼Mn), to obtain a final denoised depth image,
wherein the image decomposing device further comprises:
a distance region obtaining module for obtaining an actual distance region [Y2, Y1] that corresponds to a preset depth region [X1, X2] of the original depth image, in accordance with a corresponding relation between a depth (x) of the original depth image and an actual distance (y) of the shot object to a visual imaging apparatus;
a distance region equally-dividing module for dividing equally the actual distance region [Y2, Y1] that corresponds to the preset depth region [X1, X2] of the original depth image into n distance intervals (B1∼Bn);
a depth region dividing module for dividing the preset depth region [X1, X2] of the original depth image into n depth intervals (A1∼An) which correspond respectively to the n distance intervals (B1∼Bn); and
a depth image decomposing module for decomposing the original depth image into the n layers of depth image (M1∼Mn) which correspond respectively to the n depth intervals (A1∼An);
wherein interval lengths of the four distance intervals (B1∼Bn) are equal to one another, interval lengths of the n depth intervals (A1∼An) are not equal, and interval lengths of the n depth intervals (A1∼An) are increased in turn.

7. The depth image denoising apparatus of claim 6, wherein, the depth image decomposing module is configured for:
extracting a pixel point that corresponds to a depth interval (Ai) of the i^{th} layer of depth image (Mi), from the original depth image, placing the extracted pixel point into a corresponding pixel point position in the i^{th} layer of depth image (Mi), and setting all the rest pixel point positions in the i^{th} layer of depth image (Mi) to zero, where 1≤i≤n.

8. The depth image denoising apparatus of claim 7, wherein,
the actual distance (y) of the shot object to the visual imaging apparatus is within a range of 0∼10m;
a value of the depth of the original depth image is within a range of 0∼256; and
the actual distance region [Y2, Y1] that corresponds to the preset depth region [X1, X2] of the original depth image is chosen to be [1m, 4m].

9. The depth image denoising apparatus of claim 6, wherein,
the visual imaging apparatus by which the original depth image of a shot object is obtained comprises a pair of cameras.

10. The depth image denoising apparatus of claim 9, wherein,
the pair of cameras are arranged at either side of the shot object symmetrically;
the shot object is shot simultaneously by the pair of cameras; and
the original depth image of the shot object is obtained in accordance with two images shot simultaneously by the pair of cameras.

## Patentansprüche

1. Tiefenbildentrauschungsverfahren, wobei das Verfahren die folgenden Schritte umfasst:
einen Schritt S110 des Zerlegens eines ursprünglichen Tiefenbildes eines aufgenommenen Objekts in n Schichten eines Tiefenbildes (M1∼Mn), wobei n eine ganze Zahl größer oder gleich vier ist, wobei jede Schicht eines Tiefenbildes jeweils einem unterschiedlichen Tiefenintervall entspricht;
einen Schritt S120 des Entrauschens bei jeder der n Schichten des Tiefenbildes (M1∼Mn), um mindestens einen isolierten Rauschbereich in jeder der n Schichten des Tiefenbildes (M1∼Mn) zu eliminieren; und
einen Schritt S130 des Zusammenführens der entrauschten n Schichten des Tiefenbildes (M1∼Mn), um ein finales entrauschtes Tiefenbild zu erhalten,
wobei der Schritt S110 ferner die folgenden Schritte umfasst:
einen Schritt S111 des Erhaltens eines tatsächlichen Abstandsbereichs [Y2, Y1], der einem voreingestellten Tiefenbereich [X1, X2] des ursprünglichen Tiefenbildes entspricht, gemäß einer entsprechenden Beziehung zwischen einer Tiefe (x) des ursprünglichen Tiefenbildes und einem tatsächlichen Abstand (y) des aufgenommenen Objekts zu einer visuellen Abbildungsvorrichtung;
einen Schritt S112 des gleichmäßigen Aufteilens des tatsächlichen Abstandsbereichs [Y2, Y1], der dem voreingestellten Tiefenbereich [X1, X2] des ursprünglichen Tiefenbildes entspricht, in n Abstandsintervalle (B1∼Bn);
einen Schritt S113 des Aufteilens des voreingestellten Tiefenbereichs [X1, X2] des ursprünglichen Tiefenbildes in n Tiefenintervalle (A1∼An), die jeweils den n Abstandsintervallen (B1∼Bn) entsprechen; und
einen Schritt S114 des Zerlegens des ursprünglichen Tiefenbildes in die n Schichten des Tiefenbildes (M1∼Mn), die jeweils den n Tiefenintervallen (A1∼An) entsprechen;
wobei die Intervalllängen der vier Abstandsintervalle (B1∼Bn) einander gleich sind, Intervalllängen der n Tiefenintervalle (A1∼An) nicht gleich sind, und Intervalllängen der n Tiefenintervalle (A1∼An) der Reihe nach vergrößert werden.

2. Tiefenbildentrauschungsverfahren nach Anspruch 1, wobei der Schritt S114 umfasst:
Extrahieren eines Pixelpunkts, der einem Tiefenintervall (Ai) der i-ten Schicht des Tiefenbildes (Mi) entspricht, aus dem ursprünglichen Tiefenbild, Platzieren des extrahierten Pixelpunkts an einer entsprechenden Pixelpunktposition in der i-ten Schicht des Tiefenbildes (Mi), und Setzen aller restlichen Pixelpunktpositionen in der i-ten Schicht des Tiefenbildes (Mi) auf Null, wobei 1 ≤ i ≤ n ist.

3. Tiefenbildentrauschungsverfahren nach Anspruch 2, wobei
der tatsächliche Abstand (y) des aufgenommenen Objekts zu der visuellen Abbildungsvorrichtung innerhalb eines Bereichs von 0∼10 m liegt;
ein Wert für die Tiefe des ursprünglichen Tiefenbilds innerhalb eines Bereichs vom 0-256 liegt; und
der tatsächliche Abstandsbereich [Y2, Y1], der dem voreingestellten Tiefenbereich [X1, X2] des ursprünglichen Tiefenbildes entspricht, zu [1 m, 4 m] gewählt wird.

4. Tiefenbildentrauschungsverfahren nach Anspruch 1, wobei
die visuelle Abbildungsvorrichtung, durch das das ursprüngliche Tiefenbild des aufgenommenen Objekts erhalten wird, ein Kamerapaar umfasst.

5. Tiefenbildentrauschungsverfahren nach Anspruch 4, wobei das Erhalten des ursprünglichen Tiefenbildes des aufgenommenen Objekts die folgenden Schritte umfasst:
symmetrisches Anordnen des Kamerapaares an beiden Seiten des aufgenommenen Objekts;
simultanes Aufnehmen des aufgenommenen Objekts unter Verwendung des Kamerapaares, um zwei Bilder des aufgenommenen Objekts zu erhalten; und
Erhalten des ursprünglichen Tiefenbildes des aufgenommenen Objekts gemäß den zwei simultan aufgenommenen Bildern unter Verwendung des Kamerapaares.

6. Tiefenbildentrauschungsvorrichtung, wobei die Tiefenbildentrauschungsvorrichtung umfasst:
ein Bildzerlegungsgerät, das konfiguriert ist, ein ursprüngliches Tiefenbild in n Schichten eines Tiefenbildes (M1∼Mn) zu zerlegen, wobei n eine ganze Zahl größer oder gleich vier ist, wobei jede Schicht des Tiefenbildes jeweils einem unterschiedlichen Tiefenintervall entspricht;
ein Bildentrauschungsgerät, das konfiguriert ist, jede der n Schichten des Tiefenbildes (M1∼Mn) zu entrauschen, um mindestens einen isolierten Rauschbereich in jeder der n Schichten des Tiefenbildes (M1∼Mn) zu eliminieren; und
ein Bildzusammenführungsgerät, das konfiguriert ist, die entrauschten n Schichten des Tiefenbildes (M1∼Mn) zusammenzuführen, um ein finales entrauschtes Tiefenbild zu erhalten,
wobei das Bildzerlegungsgerät ferner umfasst:
ein Abstandsbereichserfassungsmodul zum Erhalten eines tatsächlichen Abstandsbereichs [Y2, Y1], der einem voreingestellten Tiefenbereich [X1, X2] des ursprünglichen Tiefenbildes entspricht, gemäß einer entsprechenden Beziehung zwischen einer Tiefe (x) der ursprünglichen Tiefenbildes und einem tatsächliche Abstand (y) des aufgenommenen Objekts zu einer visuellen Abbildungsvorrichtung;
ein Abstandsbereichs-Gleichaufteilungsmodul zum gleichmäßigen Aufteilen des tatsächlichen Abstandsbereichs [Y2, Y1], der dem voreingestellten Tiefenbereich [XI, X2] des ursprünglichen Tiefenbildes entspricht, in n Abstandsintervalle (B1∼Bn);
ein Tiefenbereichs-Aufteilungsmodul zum Aufteilen des voreingestellten Tiefenbereichs [X1, X2] des ursprünglichen Tiefenbildes in n Tiefenintervalle (A1∼An), die jeweils den n Abstandsintervallen (B1∼Bn) entsprechen; und
ein Tiefenbildzerlegungsmodul zum Zerlegen des ursprünglichen Tiefenbildes in die n Schichten des Tiefenbildes (M1∼Mn), die jeweils den n Tiefenintervallen (A1∼An) entsprechen;
wobei Intervalllängen der vier Abstandsintervalle (B1∼Bn) einander gleich sind, Intervalllängen der n Tiefenintervalle (A1∼An) nicht gleich sind, und Intervalllängen der n Tiefenintervalle (A1∼An) der Reihe nach vergrößert sind.

7. Tiefenbildentrauschungsvorrichtung nach Anspruch 6, wobei das Tiefenbildzerlegungsmodul konfiguriert ist zum
Extrahieren eines Pixelpunkts, der einem Tiefenintervall (Ai) der i-ten Schicht des Tiefenbildes (Mi) entspricht, aus dem ursprünglichen Tiefenbild, Platzieren des extrahierten Pixelpunkts an einer entsprechenden Pixelpunktposition in der i-ten Schicht des Tiefenbildes (Mi), und Setzen aller restlichen Pixelpunktpositionen in der i-ten Schicht des Tiefenbildes (Mi) auf Null, wobei 1 ≤ i ≤ n ist.

8. Tiefenbildentrauschungsvorrichtung nach Anspruch 7, wobei
der tatsächliche Abstand (y) des aufgenommenen Objekts zu der visuellen Abbildungsvorrichtung innerhalb eines Bereichs von 0∼10 m liegt;
ein Wert der Tiefe des ursprünglichen Tiefenbilds innerhalb eines Bereichs von 0∼256 liegt; und
der tatsächliche Abstandsbereich [Y2, Y1], der dem voreingestellten Tiefenbereich [X1, X2] des ursprünglichen Tiefenbildes entspricht, zu [1 m, 4 m] gewählt ist.

9. Tiefenbildentrauschungsvorrichtung nach Anspruch 6, wobei
die visuelle Abbildungsvorrichtung, mit der das ursprüngliche Tiefenbild eines aufgenommenen Objekts erhalten wird, ein Kamerapaar umfasst.

10. Tiefenbildentrauschungsvorrichtung nach Anspruch 9, wobei
das Kamerapaar zu beiden Seiten des aufgenommenen Objekts symmetrisch angeordnet ist;
das aufgenommene Objekt von zwei Kameras simultan aufgenommen wird; und
das ursprüngliche Tiefenbild des aufgenommenen Objekts gemäß zwei Bildern erhalten wird, die simultan von dem Kamerapaar aufgenommen wurden.

## Revendications

1. Procédé de débruitage d'image de profondeur, ce procédé comprenant les étapes suivantes :
une étape S110 de décomposition d'une image de profondeur originale d'un objet visé en n couches d'image de profondeur (M1∼Mn), n étant un nombre entier qui est supérieur ou égal à quatre, chaque couche d'image de profondeur correspondant respectivement à un intervalle de profondeur différent ;
une étape S120 de débruitage de chacune des n couches d'image de profondeur (M1∼Mn) pour éliminer au moins une zone de bruit isolée dans chacune des n couches d'image de profondeur (M1∼Mn) ; et
une étape S130 de fusion des n couches d'image de profondeur (M1∼ Mn) pour obtenir une image de profondeur débruitée finale,
dans lequel l'étape S110 comprend en outre les étapes suivantes :
une étape S111 d'obtention d'une zone de distance réelle [Y2, Y1] qui correspond à une zone de profondeur préétablie [X1, X2] de l'image de profondeur originale en fonction d'une relation correspondante entre une profondeur (x) de l'image de profondeur originale et d'une distance réelle (y) de l'objet visé par rapport à un appareil d'imagerie visuelle ;
une étape S112 de division à égalité de la zone de distance réelle [Y2, Y1] qui correspond à la zone de profondeur préétablie [X1, X2] de l'image de profondeur originale en n intervalles de distance (B1∼Bn);
une étape S113 de division de la zone de distance réelle [X1, X2] de l'image de profondeur originale en n intervalles de distance (A1∼An) qui correspondent respectivement aux en n intervalles de distance (B1∼Bn) ; et
une étape S114 de décomposition de l'image de profondeur originale en les n couches d'image de profondeur (M1∼Mn) qui correspondent respectivement aux n intervalles de profondeur (A1∼An) ;
les longueurs d'intervalles des quatre intervalles de distance (B1∼Bn) ; étant égales les unes aux autres, les intervalles de longueur des n intervalles de profondeur (A1∼An) n'étant pas égaux et les intervalles de longueur des n intervalles de profondeur (A1∼An) augmentant à tour de rôle.

2. Procédé de débruitage d'image de profondeur selon la revendication 1, dans lequel l'étape S114 comprend :
l'extraction d'un point de pixel qui correspond à un intervalle de profondeur (Ai) de la i^{ème} couche d'image de profondeur (Mi) de l'image de profondeur d'origine, le placement du point de pixel extrait dans une position de point de pixel correspondante dans la i^{ème} couche d'image de profondeur (Mi), et la fixation de toutes les positions de points de pixels restantes dans la i^{ème} couche d'image de profondeur (Mi) à zéro, sachant que 1≤i≤n.

3. Procédé de débruitage d'image de profondeur selon la revendication 2, dans lequel la distance réelle (y) entre l'objet visé et l'appareil d'imagerie visuelle est de l'ordre de 0∼10 m ;
une valeur de la profondeur de l'image de profondeur originale est de l'ordre de 0∼256 ;
la zone de distance réelle [Y2, Y1] qui correspond à la zone de profondeur préétablie [X1, X2] de l'image de profondeur originale est choisie de manière à être de [1 m, 4 m].

4. Procédé de débruitage d'image de profondeur selon la revendication 1, dans lequel
l'appareil d'imagerie visuelle grâce auquel l'image de profondeur originale de l'objet visé est obtenue comprend une paire de caméras.

5. Procédé de débruitage d'image de profondeur selon la revendication 4, dans lequel l'obtention de l'image de profondeur originale de l'objet visé comprend les étapes suivantes :
disposition la paire de caméras sur une face quelconque de l'objet visé symétriquement ;
prise d'une photo de l'objet visé simultanément en utilisant la paire de caméras pour obtenir deux images de l'objet visé ; et
obtention de l'image de profondeur originale de l'objet visé en fonction des deux images prises simultanément en utilisant la paire de caméras.

6. Appareil de débruitage d'image de profondeur, l'appareil de débruitage d'image de profondeur comprenant :
un dispositif de décomposition d'image conçu pour décomposer une image de profondeur originale en n couches d'image de profondeur (M1∼ Mn), n étant un nombre entier qui est supérieur ou égal à quatre,
dans lequel chaque couche image de profondeur correspond respectivement à un intervalle de profondeur différent ;
un dispositif de débruitage d'image conçu pour débruiter sur chacune des n couches d'image de profondeur (M∼Mn) pour éliminer au moins une zone de bruit isolée dans chacune des n couches d'image de profondeur (M1 ∼Mn) ; et
un dispositif de fusion d'image conçu pour fusionner les n couches débruitées d'image de profondeur (M1∼Mn) pour obtenir une image de profondeur débruitée finale,
le dispositif de décomposition d'images comprenant en outre :
un module d'obtention de zone de distance pour obtenir une zone de distance réelle [Y2, Y1] qui correspond à une zone de profondeur préétablie [X1, X2] de l'image de profondeur originale en fonction d'une relation correspondante entre une profondeur (x) de l'image de profondeur originale et d'une distance réelle (y) de l'objet visé par rapport à un appareil d'imagerie visuelle ;
un module de division à égalité de zone de distance pour diviser à égalité la zone de distance réelle [Y2, Y1] qui correspond à la zone de profondeur préétablie [X1, X2] de l'image de profondeur originale en n intervalles de distance (B1 ∼ Bn) ;
un module de division de zone de profondeur pour diviser la zone de profondeur préétablie [X1, X2] de l'image de profondeur originale en n intervalles de profondeur (A1 ∼ An) qui correspondent image respectivement au n intervalles de distance (B1 ∼ Bn) ; et
un module de décomposition d'image de profondeur pour décomposer l'image de profondeur originale en les n couches d'image de profondeur (M1 ∼ Mn) qui correspondent respectivement aux n intervalles de profondeur (A1 ∼ An) ;
les longueurs d'intervalles des quatre intervalles de distance (B1 ∼ Bn) ; étant égales les unes aux autres, les intervalles de longueur des n intervalles de profondeur (A1 ∼ An) n'étant pas égaux et les intervalles de longueur des n intervalles de profondeur (A1 ∼ An) augmentant à tour de rôle.

7. Appareil de débruitage d'image de profondeur selon la revendication 6, dans lequel le module de décomposition d'image de profondeur est conçu pour :
extraire un point de pixel qui correspond à un intervalle de profondeur (Ai) de la i^{ème} couche d'image de profondeur (Mi) de l'image de profondeur originale, placer le point de pixel extrait dans une position de point de pixel correspondante dans la i^{ème} couche d'image de profondeur (Mi), et fixer toutes les positions de points de pixels restantes dans la i^{ème} couche d'image de profondeur (Mi) à zéro, sachant que 1 ≤ i ≤ n.

8. Appareil de débruitage d'image de profondeur selon la revendication 7, dans lequel
la distance réelle (y) entre l'objet visé et l'appareil d'imagerie visuelle est de l'ordre de 0 ∼ 10 m ;
une valeur de la profondeur de l'image de profondeur originale est de l'ordre de 0 ∼ 256 ;
la zone de distance réelle [Y2, Y1] qui correspond à la zone de profondeur préétablie [X1, X2] de l'image de profondeur originale est choisie de manière à être de [1 m, 4 m].

9. Appareil de débruitage d'image de profondeur selon la revendication 6, dans lequel
l'appareil d'imagerie visuelle grâce auquel l'image de profondeur originale de l'objet visé est obtenue comprend une paire de caméras.

10. Appareil de débruitage d'image de profondeur selon la revendication 9, dans lequel
la paire de caméras est disposée sur une face quelconque de l'objet visé symétriquement ;
l'objet visé est pris en photo simultanément par la paire de caméras ; et
l'image de profondeur originale de l'objet visé est obtenue en fonction de deux images prises simultanément par la paire de caméras.
